# EUROPEAN PATENT SPECIFICATION

(11) **EP 1 839 178 B1**
(45) Date of publication and mention of the grant of the patent: **26.12.2018**
(21) Application number: 06717386.4
(22) Date of filing: 03.01.2006
(51) Int. Cl.: G06F 15/16

(54) **GEO-LOCATING LOAD BALANCING**
GEO-LOKALISIERUNG EINES LASTENAUSGLEICHS
EQUILIBRAGE DE CHARGES PAR GEOLOCALISATION

(30) Priority: 31.12.2004 US 27275; 10.11.2005 US 271941
(43) Date of publication of application: 03.10.2007
(73) Proprietor: Level 3 Communications, LLC, Broomfield, CO 80021 (US)
(72) Inventor: SIRKIN, Craig, Denver, Colorado 80238 (US)
(74) Representative: Martin, Philip John
(86) International application number: PCT/US2006/000170
(87) International publication number: WO 2006/072114

(56) References cited:
- WO-A2-98/57275
- US-A1- 2002 194 342
- US-A1- 2003 009 559
- US-A1- 2003 108 000
- US-A1- 2005 055 435
- US-B1- 6 760 775
- US-B2- 7 110 939

## Description

### BACKGROUND

### Field

Embodiments of the present invention generally relate to the field of load balancing. More particularly, embodiments of the present invention relate to techniques for directing geographically dispersed clients to the closest application servers and balancing the load among such application servers.

### Description of the Related Art

Load balancing generally refers to an attempt to distribute processing and/or communications activity evenly across a computer network so that no single device is overwhelmed. Examples of existing load balancing methodologies include Round-robin Domain Name System (DNS), flow-based load balancing, and Anycast addressing. Round-robin DNS and flow-based load balancing are limited in that they do not factor into the load balancing the location of the client or the host. Meanwhile, Anycast addressing balances only based on network metrics, has scalability issues, and does not ensure that traffic continues to reach the same destination from message to subsequent message. A network system and method of distributing accesses to a plurality of server apparatus in the network system is disclosed in US 2003/0009559 A1. A service access system and method in a telecommunications network is disclosed in US 2003/0108000 A1. A content-aware application switch and methods thereof is disclosed in US 2002/0194342 A1.

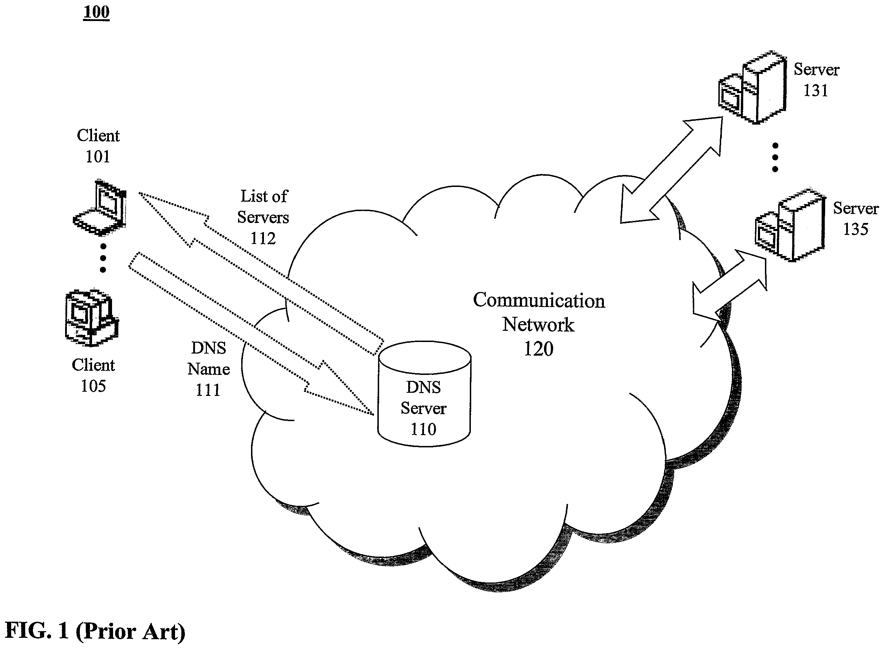

**FIG. 1** conceptually illustrates an existing DNS Round-robin approach for finding an available server offering a desired service. In this simplified illustration, clients 101-105 are communicatively coupled with servers 131-135 via a network 120. When a client, such as one of clients 101-105, needs access to a particular service offered by one of servers 131-135, it issues a Hyper Text Transport Protocol (HTTP) request containing a domain name 111 associated with the desired service. A DNS server 110 translates the domain name 111 into a corresponding set of Internet Protocol (IP) addresses for servers, such as servers 131-135, at which the desired content is mirrored, and returns a list of servers 112 to the client. The client then typically directs its request to the first IP address in the list of servers 112. If no response is received from the server associated with the first IP address, then the client may reissue its request to the second IP address in the list of servers 112 and so on until it finds an available server. In view of this example, it should be appreciated that neither the geographic location of the client nor the geographic location of the server is taken into consideration in determining to which server 131-135 a client should direct a service request.

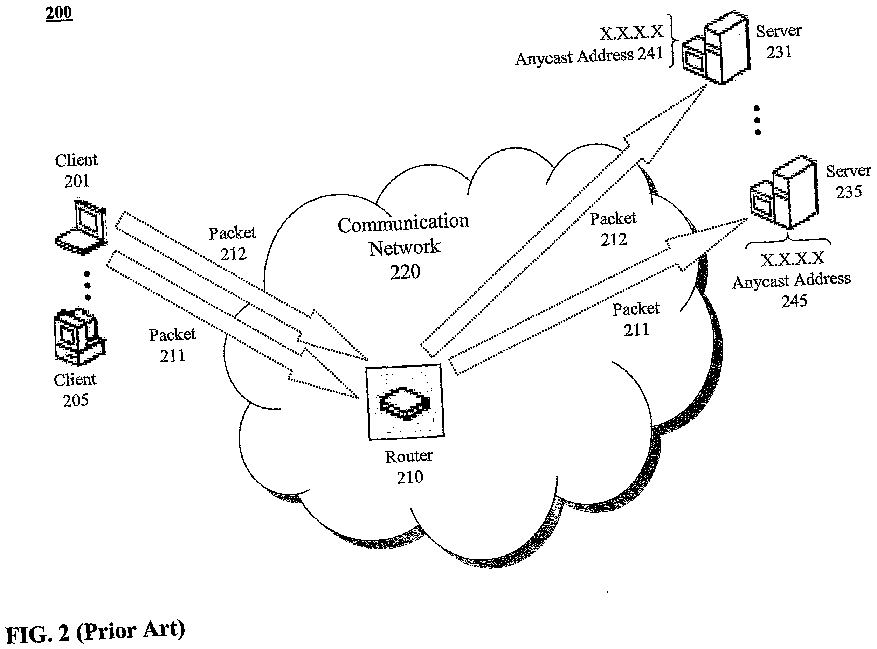

**FIG. 2** conceptually illustrates an existing approach for directing requests to the closest server having a shared Anycast address. Anycast addressing is a form of communication that takes place over a network between a client and the "nearest" of a set of servers that can respond to the client's service request, where "nearest" is determined by network metrics. In this simplified illustration, clients 201-205 are communicatively coupled with servers 231-235 via a network 220. Each of servers 231-235 offers a common service and advertises to router 210 a corresponding shared Anycast address 241-245 of X.X.X.X. When a client, such as one of clients 101-105, issues a request to Anycast address X.X.X.X, such as service request 211, for the service offered by servers 231-235, the router 210 directs the request to the nearest of the servers 231-235 that serves the Anycast address as determined by the most recent network metrics calculated by router 210 or otherwise provided to the router 210. Consequently, a subsequent service request, such as service request 212, even if issued by the same client, may be directed to a different server based on then existing network metrics as observed by router 210. In view of this example, it should be appreciated that Anycast addressing only balances based on current network metrics without regard for the relative load being experienced by servers 231-235. Furthermore, Anycast addressing will not scale beyond the point where the nearest server is incapable of handling all traffic in its area.

While the load balancing approaches discussed above may be adequate for web traffic and flow-based network communications, they do not address the needs of session-based, latency dependent applications, such as Voice over IP (VoIP), which aspire to reliably minimize latency through the network.

### BRIEF DESCRIPTION OF THE

### SEVERAL VIEWS OF THE DRAWINGS

Embodiments of the present invention are illustrated by way of example, and not by way of limitation, in the figures of the accompanying drawings and in which like reference numerals refer to similar elements and in which:
**FIG. 1** conceptually illustrates an existing Domain Name System (DNS) Round-robin approach for finding an available server offering a desired service.
**FIG. 2** conceptually illustrates an existing approach for directing requests to the closest server having a shared Anycast address.
**FIG. 3** conceptually illustrates a high-level geo-locating load balancing architecture according to one embodiment of the present invention.
**FIG. 4** conceptually illustrates high-level call registration flow according to a redirection embodiment of the present invention.
**FIG. 5** conceptually illustrates high-level call registration flow according to a redirection by proxying embodiment of the present invention.
**FIG. 6** conceptually illustrates high-level call registration flow according to a proxy forwarding embodiment of the present invention.
**FIG. 7** is an example of a computer system with which embodiments of the present invention may be utilized.
**FIG. 8** is a flow diagram illustrating session establishment processing according to a redirection embodiment of the present invention.
**FIG. 9** is a flow diagram illustrating session establishment processing according to a redirection by proxying embodiment of the present invention.
**FIG. 10** is a flow diagram illustrating session establishment processing according to a proxy forwarding embodiment of the present invention.

### SUMMARY

According to a first aspect of the invention, there is provided a method according to claim 1.

According to a further aspect of the invention, there is provided a communication network according to claim 13.

Preferred embodiments of the invention are described in the dependent claims.

For example, methods and apparatus embodiments are described for geo-locating load balancing. According to one embodiment, the geo-locating load balancing methodology includes a load balancer advertising a virtual Internet Protocol (IP) address shared by one or more other load balancers. The load balancer performs load balancing of requests for services offered by multiple servers corresponding to the load balancer by causing a service request issued by a client to be directed to a particular server.

In one embodiment, a method is provided for establishing a session for a Voice over IP (VoIP) call. A voice client coupled to a communication network issues a Session Initiation Protocol (SIP) Register message to an Anycast address serviced by multiple proxy servers coupled to the communication network. The SIP Register message is received by the proxy server determined to be closest to the voice client based on metrics associated with the communication network. The closest proxy server then causes the SIP Register message to be directed to a particular registrar server of multiple registrar servers associated with the proxy server based on a load balancing routine.

According to one embodiment, a novel communication network architecture is provided, including multiple servers, multiple load balancers, and multiple geographically dispersed communication devices. The servers provide services to the communication devices within the communication network. The load balancers each service a shared virtual Internet Protocol (IP) address common to all of the load balancers and perform load balancing of service requests on behalf of two or more of the servers that are located geographically proximate to the load balancer. The communication devices are communicatively coupled with the load balancers and are configured to issue service requests intended for any of the servers to the shared virtual IP address. In this manner, upon issuing a service request, a communication device is directed to a particular server selected by a load balancing routine that is associated with a load balancer that is closest to the communication device.

Other features of embodiments of the present invention will be apparent from the accompanying drawings and from the detailed description that follows.

### DETAILED DESCRIPTION

Methods and apparatus are described for geo-locating load balancing. Broadly stated, embodiments of the present invention seek to provide a mechanism for directing geographically dispersed clients to the "closest" feature servers without previously determining their locations and then balancing the load across the closest feature servers. According to one embodiment, a method is provided for establishing a session for a Voice over IP (VoIP) call. A voice client coupled to a communication network issues a Session Initiation Protocol (SIP) Register message to an Anycast address serviced by multiple proxy servers coupled to the communication network. The SIP Register message is received by the proxy server determined to be closest to the voice client based on metrics associated with the communication network. The closest proxy server then causes the SIP Register message to be directed to a particular registrar server of multiple registrar servers associated with the proxy server based on a load balancing routine.

Depending upon the implementation the load balancer may operate in accordance with one or more service request processing methodologies referred to herein as "redirection," "redirection by proxying," and "proxy forwarding." When performing redirection and redirection by proxying, the load balancer causes the service request to be directed to the particular server and is thereafter excluded from subsequent messaging flow exchanged between the particular server and the client relating to the session. When performing proxy forwarding, the load balancer remains within subsequent messaging flow exchanged between the particular server and the client relating to the session.

In the following description, for the purposes of explanation, numerous specific details are set forth in order to provide a thorough understanding of embodiments of the present invention. It will be apparent, however, to one skilled in the art that embodiments of the present invention may be practiced without some of these specific details. In other instances, well-known structures and devices are shown in block diagram form.

Embodiments of the present invention include various steps, which will be described below. The steps may be performed by hardware components or may be embodied in machine-executable instructions, which may be used to cause a general-purpose or special-purpose processor programmed with the instructions to perform the steps. Alternatively, the steps may be performed by a combination of hardware, software, and/or firmware.

Embodiments of the present invention may be provided as a computer program product which may include a machine-readable medium having stored thereon instructions which may be used to program a computer (or other electronic devices) to perform a process. The machine-readable medium may include, but is not limited to, floppy diskettes, optical disks, compact disc read-only memories (CD-ROMs), and magneto-optical disks, ROMs, random access memories (RAMs), erasable programmable read-only memories (EPROMs), electrically erasable programmable read-only memories (EEPROMs), magnetic or optical cards, flash memory, or other type of media / machine-readable medium suitable for storing electronic instructions. Moreover, embodiments of the present invention may also be downloaded as a computer program product, wherein the program may be transferred from a remote computer to a requesting computer by way of data signals embodied in a carrier wave or other propagation medium via a communication link (e.g., a modem or network connection).

While, for convenience, embodiments of the present invention may be described with reference to Internet Protocol (IP) originating voice products/services and other VoIP applications, the present invention is equally applicable to various other session-based, latency dependent applications and/or applications that require real-time performance, such as online gaming, instant messaging, applications based on human interactions (e.g., collaborative software, online/Web collaboration, voice conferencing, and video conferencing), and real-time data communication and/or exchange, such as market data applications, financial transactions, and the like.

### Terminology

Brief definitions of terms used throughout this application are given below.

The terms "closeness," "nearness," "closest," "nearest" and the like are used herein in a logical sense and are not necessarily limited to physical proximity. According to one embodiment, one or more or a combination of various network metrics, such as link congestion, cost metrics assigned to given routers, etc., are relied upon to determine the closeness or nearness (e.g., the logical proximity) of two devices communicatively coupled to a packet-based network. In some cases, the logical proximity between devices is determined by or based upon link-state information and/or routing protocols, such as Open Shortest Path First (OSPF), Interior Gateway Routing Protocol (IGRP), Routing Information Protocol (RIP), Intermediate System-to-Intermediate System (IS-IS) or the like. In one embodiment, the closest or nearest of a plurality of load balancers to a particular client is the load balancer with which the client is capable of communicating and experiencing the least latency and/or traversing the fewest hops. Depending on the context, this notion of logical proximity may have different meanings. For example, in the context of a client connected directly to the target service network in which the novel load balancers reside, the client may be directed to the geographically closest operating load balancer based on routing metrics within the target service network. In the context of a client connected indirectly to the target service network in which the novel load balancers reside (via a border network, for example), the client may be directed to the load balancer geographically closest to that Internet Service Provider's (ISP's) preferred point of interconnection with the target service network.

The phrase "communication device" or the term "client" generally refers to a device whereby communications or other information are directly or indirectly introduced to or received from a communication network. Thus, as just some examples, communication devices may include, but are not limited to, IP phones, H.323 phones, Session Initiation Protocol (SIP) phones, VoIP phones, Terminal Adapters (TAs), Analog Terminal Adapters (ATAs), Personal Digital Assistants (PDAs), cellular or mobile phones, Personal Computers (PCs), Digital Subscriber Line (DSL) modems, dial up modems, cable modems and the like.

The phrase "communication network" or term "network" generally refers to a group of interconnected devices capable of exchanging information. A communication network may be as few as several personal computers on a Local Area Network (LAN) or as large as the Internet, a worldwide network of computers. As used herein "communication network" is intended to encompass any network capable of transmitting information from one entity to another. In one particular case, a communication network is a Voice over Internet Protocol (VoIP) network. In some cases, a communication network may be comprised of multiple networks, even multiple heterogeneous networks, such as one or more border networks, voice networks, broadband networks, service provider networks, Internet Service Provider (ISP) networks, and/or Public Switched Telephone Networks (PSTNs), interconnected via gateways operable to facilitate communications between and among the various networks.

The terms "connected" or "coupled" and related terms are used in an operational sense and are not necessarily limited to a direct or physical connection or coupling.

The phrase "feature server" generally refers to a server that is operable to provide one or more services supported by a communications network, such as a voice network. For example, a feature server may provide telecommunications services, such as caller identification, call forwarding, voice mail, and/or the like. In one embodiment, a feature server comprises a Class-5 soft switch. In other embodiments, a feature server may represent, a registrar server.

The phrase "registrar server" generally refers to a particular type of feature server that performs registration and/or call routing. According to one embodiment, a registrar server processes and maintain SIP Registrations for each of the call parties to enable it to route calls when a SIP INVITE is received. For example, when one user wishes to call another, both clients may perform a SIP Registration with the registrar server; this provides enough information for the registrar server to route the call when the INVITE is later sent from one user to the other.

The phrases "in one embodiment," "according to one embodiment," and the like generally mean the particular feature, structure, or characteristic following the phrase is included in at least one embodiment of the present invention, and may be included in more than one embodiment of the present invention. Importantly, such phases do not necessarily refer to the same embodiment.

If the specification states a component or feature "may", "can", "could", or "might" be included or have a characteristic, that particular component or feature is not required to be included or have the characteristic.

The phrase "load balancer" generally refers to a logical or physical device that performs load balancing, such as hardware load balancing solutions performed by computer systems, switches and/or routers, software load balancing solutions, load balancing servers and the like. According to one embodiment load balancer software is run on an Edge Proxy Server, such as a Netra 240 Server available from Sun Microsystems. According to an embodiment, load balancing may be performed by one or more dedicated hardware-based flow-based load balancers which selectively send traffic from clients to particular servers based on the amount of load that the load balancer is currently sending to the servers for which it fronts. According to one embodiment, a load balancer may be capable of forwarding to additional devices in front of other servers or server farms if the servers for which it fronts are too heavily loaded to answer requests. Depending upon the particular implementation and the type of services to be supported, a load balancer may be stateful, stateless, or semi-stateful.

The phrase "load balancing" generally refers to a method of taking multiple requests or processes and distributing each of them across multiple computers or network devices. According to one embodiment the distribution among the multiple computers or network devices is based on how busy the computer or network device is or based on historical information regarding how previous requests or processes were distributed among the devices.

The term "responsive" includes completely or partially responsive.

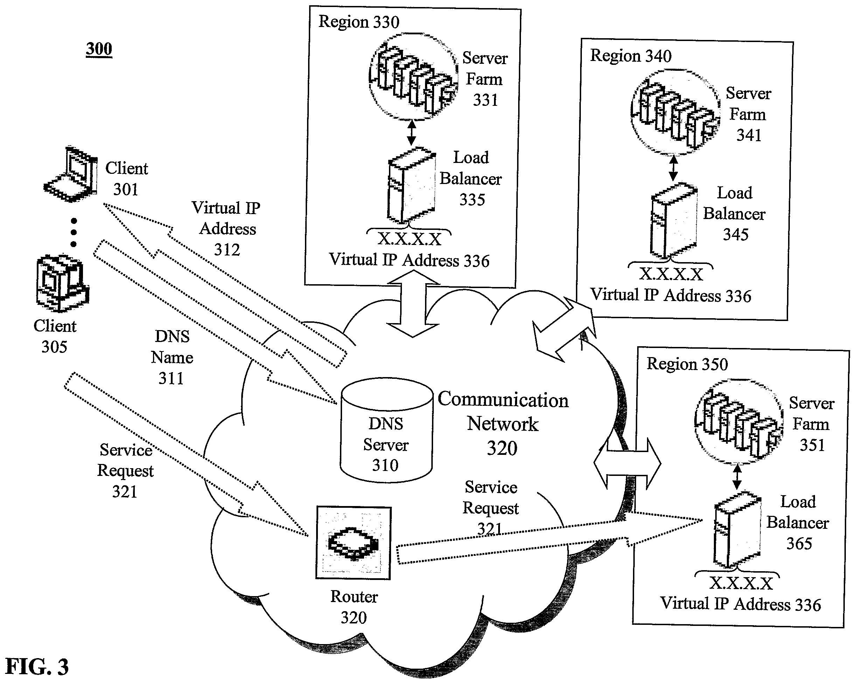

FIG. 3 conceptually illustrates a high-level geo-locating load balancing architecture according to one embodiment of the present invention. In an attempt to address various performance issues and other deficiencies of existing load balancing methodologies, the load balancing architecture described herein associates a virtual IP address, such as a shared Anycast address, with multiple load balancers residing in front of corresponding server farms or clusters. The load balancers each advertise the virtual IP address to the routing protocol of the communication network, such as the OSPF routing protocol. This allows service requests to be directed to the closest load balancer based on existing network metrics. For example, in the context of a communications network implementing the OSPF routing protocol, service requests directed to a shared Anycast address will reach the closest load balancer based on OSPF rules. The closest load balancer may then balance the load across the feature servers within the corresponding server farm in accordance with customary load balancing techniques. For example, the feature servers within a server farm or cluster may provide periodic status updates to the load balancer associated with that server farm or cluster to allow the load balancer to distribute service requests appropriately across the feature servers. According to one embodiment, in a SIP environment, a load balancer may use a SIP OPTIONS message to test liveliness of feature servers. The feature servers may provide load feedback to the load balancer via a SIP OPTIONS response message.

In this simplified illustration, each of a plurality of distinct geographic regions, such as region 330, region 340 and region 350, includes at least one load balancer and at least one server. Clients 301-305 are communicatively coupled through network 320 with server farms 331, 341 and 351 via load balancers 335, 345 and 365, respectively.

According to this example, clients 301-305 are provisioned with a Uniform Resource Identifier (URI), a Uniform Resource Locator (URL) or domain name, such as relay.level3.com, which will resolve to an address used as a virtual IP address 336 on all of the load balancers 335, 345 and 365. In alternative embodiments, clients 301-305 may be provisioned with one or more virtual IP addresses. When a client needs access to or would like to register with a particular service offered by one of server farms 331, 341 and 351, it issues a DNS name 311 request, such as a Domain Name Service lookup, containing the provisioned domain name. A DNS server 310 translates the domain name within the DNS name 311 request into the corresponding virtual IP address 336 and returns the virtual IP address to the requesting client via virtual IP address 312 message.

Continuing with the present example, the client may then direct a service request 321 to the virtual IP address 336 returned by the DNS server 310. A router 320 receiving the service request 321 then directs the service request 321 to the closest load balancer (e.g., load balancer 365) based on its internal routing tables which have been populated in accordance with routing protocol rules, such as OSPF rules. The load balancer 365, then redirects the request to an appropriate server (not shown) within the server farm 351. This redirection may be distributed among the servers within the server farm 351 based on past redirection, in a round-robin fashion, or based on load feedback communicated to the load balancer by the servers of the server farm 341. Various other current or future load balancing methodologies may be employed, such as least connections, weighted round robin, weighted least connections, address space hashing and/or URL hashing. According to one embodiment, once a service request, such as a SIP REGISTER message, has reached the closest load balancer, the load balancer will reply with a SIP 302 Temporarily Moved message containing the next entry in a rotating list of addresses of clusters of Real-Time Transport Protocol (RTP) relay devices. Advantageously, in this manner, geographically dispersed clients may be directed to the closest feature servers while the load is balanced appropriately among such feature servers.

In the simplified examples discussed herein, it should be appreciated that the communication networks may be comprised of multiple heterogeneous networks and clients, load balancers, feature servers, Network Address Translation (NAT) traversal managers (NTMs) and other network devices may be associated with the same network or different networks within a particular communication network. Furthermore, while a single router, such as router 320, is depicted in various examples described herein, it should be appreciated that messaging exchanged between clients and load balancers, feature servers and/or NTMs need not be via a particular router of set of routers. Rather, a router is depicted in the logical sense merely to convey the fact that routing protocols and/or network metrics are involved in the process of directing client service requests to the nearest load balancer. In a real world scenario, messaging exchanged among clients, load balancers, features servers, NTMs and the like may traverse many different routers.

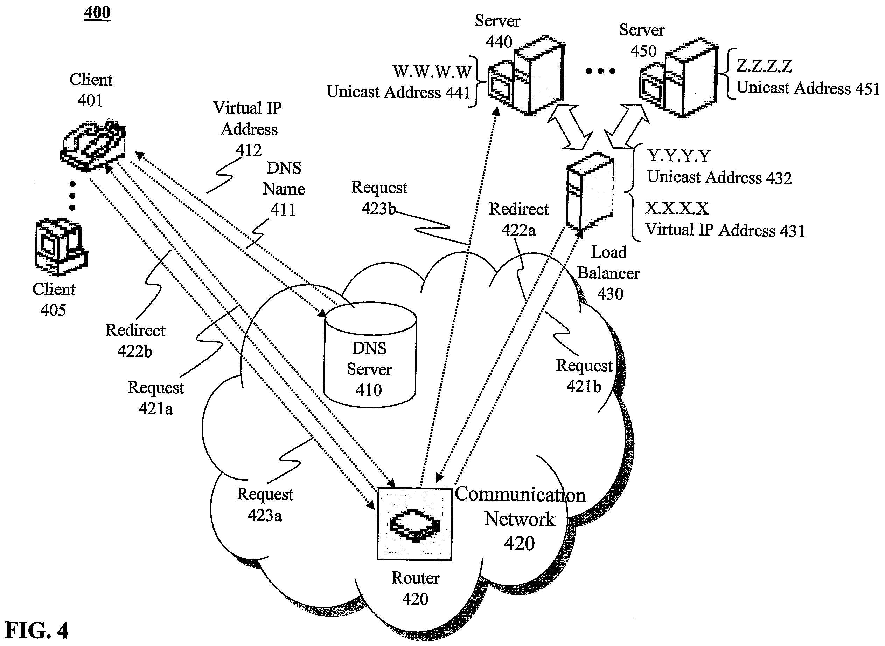

**FIG. 4** conceptually illustrates high-level call registration flow according to a redirection embodiment of the present invention. According to one embodiment, the present redirection methodology is used to initially register a voice client to a stateless load balancer, which redirects the client directly to a feature server or indirectly to a feature server via an intermediate NTM. In such an embodiment, after the initial registration flow, the load balancer is no longer part of the rest of the SIP messaging flow between the client and the NTM and/or the feature server.

According to the present example, prior to initiating a VoIP call or periodically, a client 401, such as a VoIP phone provisioned with a domain name, is configured to issue a DNS name 411 request to DNS server 410 to obtain an IP address to which a service request 421a, such as a registration request, is to be directed.

The DNS server 410 maintains a mapping of domain names to IP addresses and returns a virtual IP address 412 message containing a virtual IP address 431 of load balancer 430 which is shared by one or more other geographically distributed load balancers (not shown).

Continuing with the present example, after receiving the shared virtual IP address 431 from the DNS server 410, the client 401 may then direct a service request 421a to the shared virtual IP address 431. As above, a router 420 receiving the service request 421a directs the service request 421b to the closest load balancer (e.g., load balancer 430) based on routing protocol rules.

Load balancer 430 is operable to redirect a communication device, such as client 401, to an appropriate feature server, such as server 440 or server 450. In some cases, the load balancer 430 may be a proxy server configured to balance the load among a plurality of feature servers based on a load balancing routine.

According to the present example, the load balancer 430 redirects client 401 to server 440 by transmitting a redirect message 422a which is delivered to client 401 via router 420 as redirect message 422b. According to one embodiment, the redirect message 422a, 422b contains a unicast address 441 associated with server 440 thereby removing load balancer 430 from subsequent messaging flow by communicating to client 401 that subsequent requests should be addressed directly to server 440 using unicast address 441. According to one embodiment, the redirect message 422a, 422b comprises a SIP Moved Temporarily Message with one or more redirect URIs.

Continuing with the present example, after receiving the redirect message 422b, the client 401 is configured to direct subsequent messaging flow and/or requests, such as request 423a, to unicast address 441 which are delivered to server 440 via router 420.

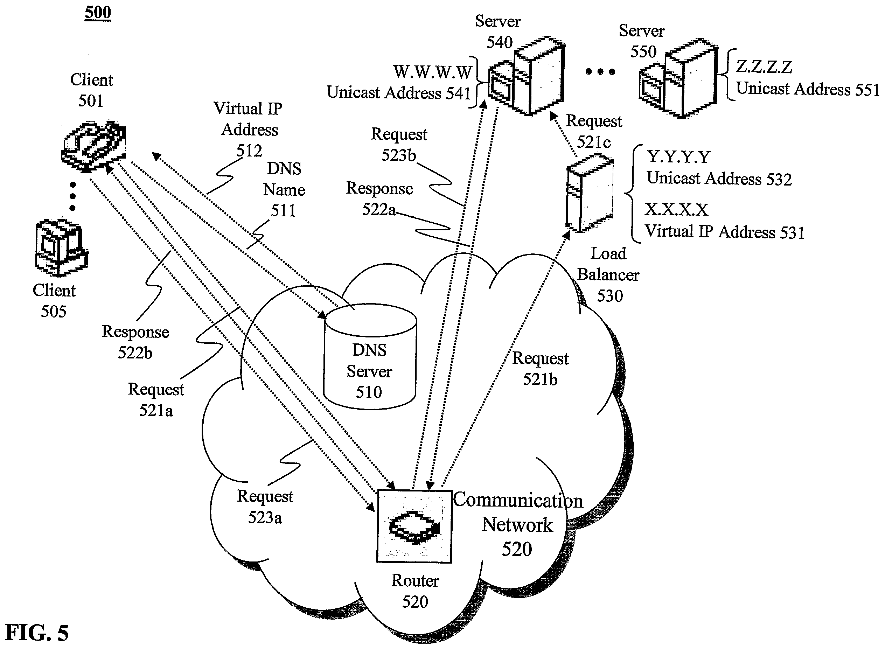

**FIG. 5** conceptually illustrates high-level call registration flow according to a redirection by proxying embodiment of the present invention. According to one embodiment, the present redirection by proxying methodology is used to register a client to a stateful or semi-stateful load balancer which remains in the SIP messaging flow even after the initial registration flow. After the load balancer redirects the initial registration request to an appropriate feature server or NTM-feature server pair, it may maintain call context to redirect subsequent SIP messaging flow and/or requests from the client to the same feature server or NTM-feature server pair. Alternatively, in a non-session-based application environment, the load balancer may be stateless as there is no need to ensure requests are redirected to the same feature server or NTM-feature server pair.

According to the present example, prior to initiating a VoIP call or periodically, a client 501, such as a VoIP phone provisioned with a domain name, is configured to issue a DNS name 511 request to DNS server 510 to obtain an IP address to which a service request 521a, such as a registration request, is to be directed.

The DNS server 510 maintains a mapping of domain names to IP addresses and is configured to translate the domain name within the DNS name 511 request into the corresponding IP address and return a virtual IP address 512 message containing a virtual IP address 531 of load balancer 530 which is shared by one or more other geographically distributed load balancers (not shown).

Continuing with the present example, after receiving the shared virtual IP address 531 from the DNS server 510, the client 501 may then direct a service request 521a to the shared virtual IP address 531. As above, a router 520 receiving the service request 521a directs the service request 521b to the closest load balancer (e.g., load balancer 530) based on routing protocol rules.

Load balancer 530 is operable to perform redirection by proxying to redirect a communication device, such as client 501, to an appropriate feature server, such as server 540 or server 550. In some cases, the load balancer 530 may be a proxy server configured to balance the load among a plurality of feature servers based on a load balancing routine.

According to the present example, the load balancer 530 redirects client 501 to server 540 by forwarding request 521c to server 540. Servers 540 and 550 are configured to direct their responses to the client 501 and identify themselves as the source of the responses, such as response 522a which is delivered to client 501 via router 520 as response 522b. According to one embodiment, the response 522a, 522b, contains a unicast address 541 associated with server 540 thereby removing load balancer 530 from subsequent messaging flow by communicating to client 501 that subsequent requests should be addressed directly to server 540 using unicast address 541. Alternatively, the response 522a, 522b may include a SIP URI associated with server 540.

Continuing with the present example, after receiving the response 522b, the client 501 is configured to direct subsequent messaging flow and/or requests, such as request 523a, to unicast address 541 which are delivered to server 540 via router 520.

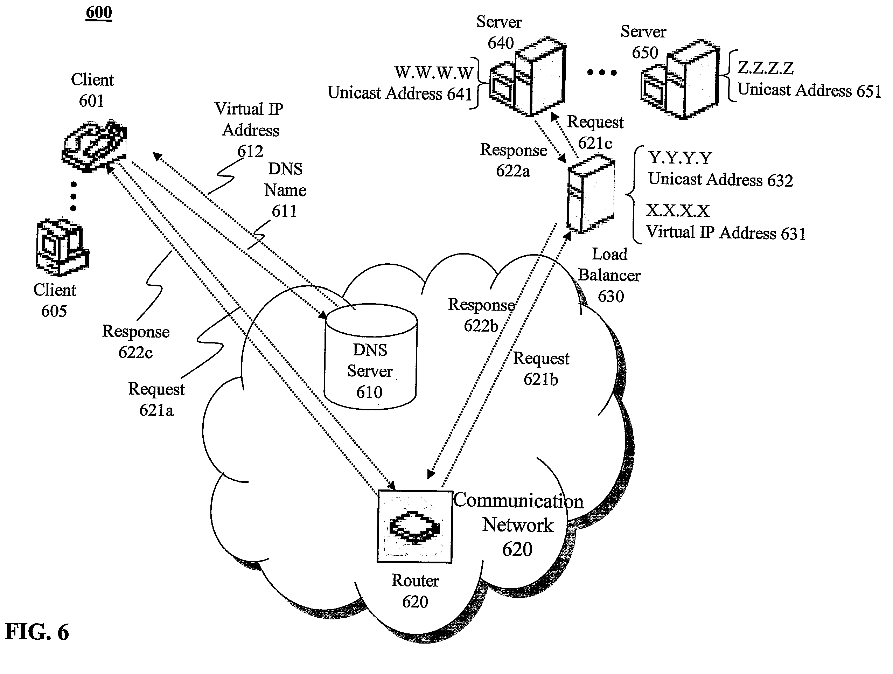

**FIG. 6** conceptually illustrates high-level call registration flow according to a proxy forwarding embodiment of the present invention. According to one embodiment, the present proxy forwarding methodology is used to register a client to a stateful or semi-stateful load balancer which remains in the SIP messaging flow even after the initial registration flow. After the load balancer forwards the initial registration request to an appropriate feature server or NTM-feature server pair, it may maintain call context to redirect subsequent SIP messaging flow and/or requests from the client to the same feature server or NTM-feature server pair. Alternatively, in a non-session-based application environment, the proxy forwarding load balancer may be stateless as there is no need to ensure requests are forwarded to the same feature server or NTM-feature server pair.

According to the present example, prior to initiating a VoIP call or periodically, a client 601, such as a VoIP phone provisioned with a domain name, is configured to issue a DNS name 611 request to DNS server 610 to obtain an IP address to which a service request 621a, such as a registration request, is to be directed.

The DNS server 610 maintains a mapping of domain names to IP addresses and is configured to translate the domain name within the DNS name 611 request into the corresponding IP address and return a virtual IP address 612 message containing a virtual IP address 631 of load balancer 630 which is shared by one or more other geographically distributed load balancers (not shown).

As above, after receiving the shared virtual IP address 631 from the DNS server 610, the client 601 may then direct a service request 621a to the shared virtual IP address 631 which is directed to the closest load balancer (e.g., load balancer 630) as request 621b based on routing protocol rules.

Load balancer 630 is operable to perform proxying by forwarding to deliver requests from communication devices, such as client 601, to an appropriate feature server, such as server 640 or server 650. In some cases, the load balancer 630 may be a proxy server configured to balance the load among a plurality of feature servers based on a load balancing routine.

According to the present example, the load balancer 630 forwards request 621b as request 621c to server 640. Servers 640 and 650 are configured to direct their responses to the load balancer 630 which in turn is operable to forward such responses to the requesting client and identify itself as the source of the responses, such as response 622a, 622b which is delivered to client 601 via router 620 as response 622c. According to one embodiment, the response 622b, 622c, contains a unicast address 632 associated with the load balancer 630 thereby maintaining load balancer 630 within subsequent messaging flow by communicating to client 601 that subsequent requests should be addressed to load balancer 630 using unicast address 632. Alternatively, the response 622b, 622c may include a SIP URI associated with load balancer 630.

Continuing with the present example, after receiving the response 622c, the client 601 is configured to direct subsequent messaging flow and/or requests to unicast address 632 which are delivered to load balancer 630 via router 620.

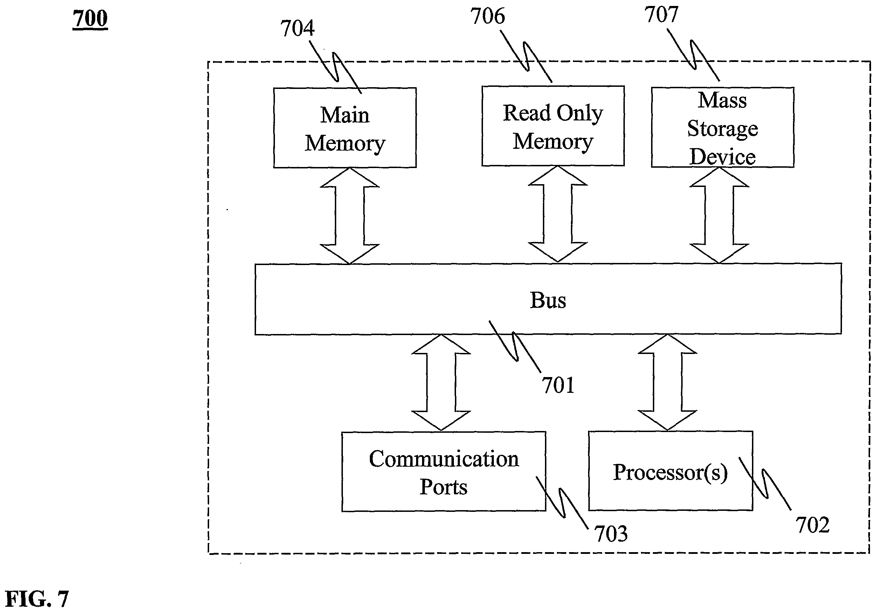

**Figure 7** is an example of a computer system 700 with which embodiments of the present invention may be utilized. Computer system 700 represents an exemplary load balancer or proxy server which may implement one or more of the redirection or forwarding mechanisms described herein (i.e., redirection, redirection by proxying and proxy forwarding). In this simplified example, the computer system 700 comprises a bus 701 or other communication means for communicating data and control information, and one or more processors 702, such as Intel® Itanium® or Itanium 2 processors or Sun® UltraSPARC-IIi® processors, coupled with bus 701.

Computer system 700 further comprises a random access memory (RAM) or other dynamic storage device (referred to as main memory 704), coupled to bus 701 for storing information and instructions to be executed by processor(s) 702. Main memory 704 also may be used for storing temporary variables or other intermediate information during execution of instructions by processor(s) 702.

Computer system 700 also comprises a read only memory (ROM) 706 and/or other static storage device coupled to bus 701 for storing static information and instructions for processor(s) 702.

A mass storage device 707, such as a magnetic disk or optical disc and its corresponding drive, may also be coupled to bus 701 for storing instructions and information, such as configuration files, a key store and registration database, etc.

One or more communication ports 703 may also be coupled to bus 701 for supporting network connections and communication of information to/from the computer system 700 by way of a communication network, such as a Local Area Network (LAN), Wide Area Network (WAN), the Internet, or PSTNs, for example. The communication ports 703 may include various combinations of well-known interfaces, such as one or more modems to provide dial up capability, one or more 10/100 Ethernet ports, one or more Gigabit Ethernet ports (fiber and/or copper), or other well-known network interfaces commonly used in internetwork environments. In any event, in this manner, the computer system 700 may be coupled to a number of other network devices, communication devices, clients, NTMs, and/or servers via a conventional communication network infrastructure.

Optionally, operator and administrative interfaces (not shown), such as a display, keyboard, and a cursor control device, may also be coupled to bus 701 to support direct operator interaction with computer system 700. Other operator and administrative interfaces can be provided through network connections connected through communication ports 703.

Finally, removable storage media (not shown), such as one or more external or removable hard drives, tapes, floppy disks, magneto-optical discs, compact disk-read-only memories (CD-ROMs), compact disk writable memories (CD-R, CD-RW), digital versatile discs or digital video discs (DVDs) (e.g., DVD-ROMs and DVD+RW), Zip disks, or USB memory devices, e.g., thumb drives or flash cards, may be coupled to bus 701 via corresponding drives, ports or slots.

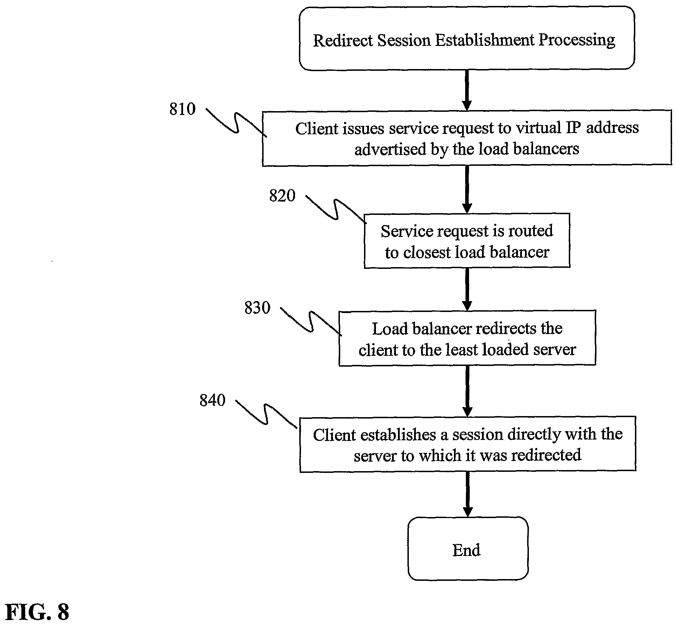

**FIG. 8** is a flow diagram illustrating session establishment processing according to a redirection embodiment of the present invention. In the present example, the client is assumed to have knowledge of a shared virtual IP address associated with multiple geographically distributed load balancers. As discussed above with reference to FIGS. 4-6, the client may obtain the shared virtual IP address in various ways. For example, the client may obtain the shared virtual IP address during a provisioning or configuration process and/or may receive the shared virtual IP address responsive to a DNS lookup based on a provisioned domain name associated with the shared virtual IP address.

At block 810, a client (e.g., voice client 401) issues a service request (e.g., service request 421a) to the shared virtual IP address. According to one embodiment, the service request is part of an initial registration flow to establish a session between the client and a feature server or between the client and another communication device.

At block 820, the service request is routed to the closest load balancer advertising the shared virtual IP address. According to one embodiment, multiple geographically distributed load balancers advertise the shared virtual IP address to the OSPF routing protocol thereby defining closeness in terms of the OSPF rules. In alternative embodiments, closeness may have different meanings. For example, in the context of a client connected directly to the target service network in which the novel load balancers reside, the client may be directed to the geographically closest operating load balancer based on routing metrics within the target service network. In the context of a client connected indirectly to the target service network in which the novel load balancers reside (via a border network, for example), the client may be directed to the load balancer geographically closest to that Internet Service Provider's (ISP's) preferred point of interconnection with the target service network.

At block 830, the load balancer (e.g., load balancer 430) redirects the client to a server or an NTM-server pair in accordance with its load balancing methodology. In the context of a client registering to participate in SIP-based voice conversations, for example, the redirection may include a SIP Moved Temporarily Message with one or more redirect URIs or an indication of a unicast address (e.g., unicast address 441) associated with the appropriate server or NTM.

According to one embodiment, load balancers and feature servers (e.g., registrar servers) or load balancers and NTM-feature server pairs are geographically distributed in physical proximity to each other to ensure clients are redirected to a feature server or NTM-feature server pair that is relatively close to the client making the request.

At block 840, a session is established between the client and the server (e.g., server 440) or NTM to which it was redirected. According to one embodiment, in response to a redirect message (e.g., redirect 422a, 422b) the client is configured to direct subsequent messaging related to the session, such as SIP messaging flow, to the server or NTM-server pair identified by the redirect message.

Advantageously, in this manner, geographically dispersed clients, such as voice clients, may be directed to the nearest feature servers while also balancing the load across the feature servers. Another desirable effect of the various geo-locating load balancing models described herein is the load balancer can be established as the only place where NTM traffic distribution occurs. Hence, provisioning may be centralized rather than potentially being spread out over millions of communication devices. The above described redirection embodiment also has the benefit of being able to be implemented by a stateless load balancer or proxy server that can be streamlined for performing efficient redirect functionality. Finally, because the load balancers need only participate in the initial register flow and can be excluded from the rest of the messaging flow, the load balancers can scale independently from the feature servers or the NTM-feature server pairs.

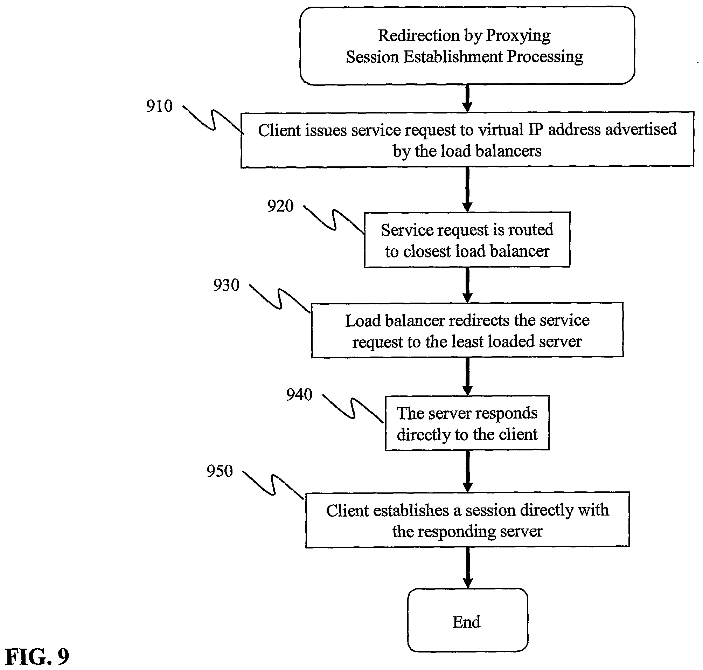

**FIG. 9** is a flow diagram illustrating session establishment processing according to a redirection by proxying embodiment of the present invention. As above, in the present example, the client is assumed to have knowledge of a shared virtual IP address associated with multiple geographically distributed load balancers. The particular mechanism for determining or becoming aware of the shared virtual IP address is not of particular importance. Rather, it is the fact that multiple load balancers share and advertise a common virtual IP address that ultimately enables the general notion of geo-locating load balancing.

At block 910, a client (e.g., voice client 501) issues a service request (e.g., service request 521a) to the shared virtual IP address. According to one embodiment, the service request is part of an initial registration flow to establish a session between the client and a feature server or between the client and another communication device.

At block 920, the service request is routed to the closest load balancer advertising the shared virtual IP address. According to one embodiment, multiple geographically distributed load balancers advertise the shared virtual IP address to the OSPF routing protocol thereby defining closeness in terms of the OSPF rules. In alternative embodiments, one or more or a combination of various network metrics, such as link congestion, cost metrics assigned to given routers, etc., may be relied upon to determine the closeness or nearness (e.g., the logical proximity) of two devices communicatively coupled to a communication network. In some cases, the logical proximity between devices is determined by or based upon link-state information and/or routing protocol rules. In one embodiment, the closest or nearest of a plurality of load balancers to a particular client is the load balancer with which the client is capable of communicating and experiencing the least latency and/or traversing the fewest hops.

At block 930, the load balancer (e.g., load balancer 530) redirects the client to a server or an NTM-server pair in accordance with its load balancing methodology. In the context of a client registering to participate in SIP-based voice conversations, for example, the redirection may be indicated by a response to a SIP Register request (e.g., response 522a) including one or more URIs associated with the appropriate server (e.g., server 540) or an indication of a unicast address (e.g., unicast address 541) associated with the appropriate server or NTM.

According to one embodiment, load balancers and feature servers (e.g., registrar servers) or load balancers and NTM-feature server pairs are geographically distributed in physical proximity to each other to ensure clients are redirected to a feature server or NTM-feature server pair that is relatively close to the client making the request.

At block 940, a session is established between the client and the server (e.g., server 540) or NTM to which the client was redirected. According to one embodiment, in response to receiving the redirection indication (e.g., response 522b) the client is configured to direct subsequent messaging related to the session, such as SIP messaging flow, to the server or NTM-server pair identified by the message containing or otherwise conveying the redirection indication.

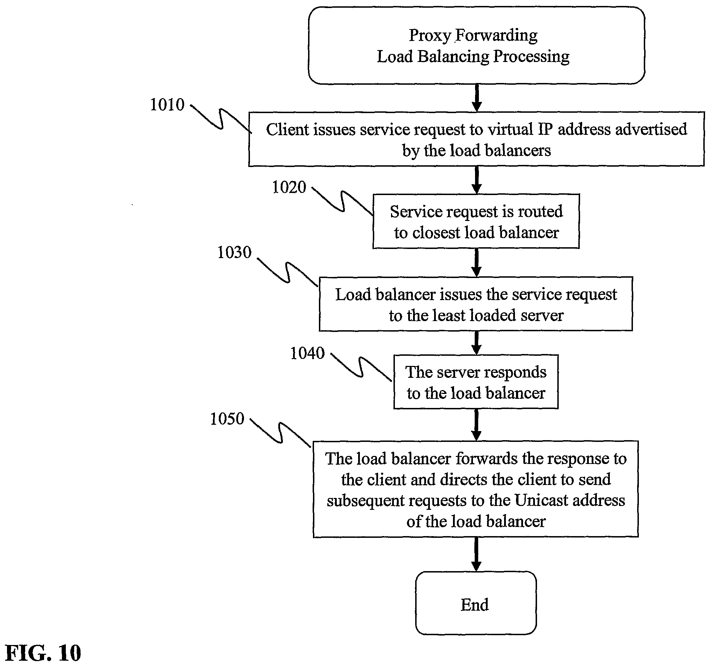

**FIG. 10** is a flow diagram illustrating session establishment processing according to a proxy forwarding embodiment of the present invention. As above, in the present example, the client is assumed to have knowledge of a shared virtual IP address associated with multiple geographically distributed load balancers.

At block 1010, a client (e.g., voice client 601) issues a service request (e.g., service request 621a) to the shared virtual IP address. According to one embodiment, the service request is part of an initial registration flow to establish a session between the client and a feature server or between the client and another communication device.

At block 1020, the service request is routed to the closest load balancer advertising the shared virtual IP address as described earlier.

' At block 1030, the load balancer (e.g., load balancer 630) forwards the service request (e.g., request 621c) to a server or an NTM-server pair in accordance with its load balancing methodology.

At block 1040, the server or NTM-server pair to which the service request was forwarded responds (e.g., response 622a) to the load balancer.

At block 1050, the load balancer forwards the response (e.g., response 622b) to the client and directs the client to transmit subsequent messaging flow relating to this session to the load balancer. According to one embodiment, the load balancer directs the client to transmit subsequent messaging flow relating to this session to the load balancer by identifying the load balancer's unicast address as the source of the forwarded response (e.g., response 622b). Alternatively, the forwarded response may include a SIP URI associated with load balancer 630.

In the foregoing specification, the invention has been described with reference to specific embodiments thereof. The specification and drawings are, accordingly, to be regarded in an illustrative rather than a restrictive sense.

## Claims

1. A method comprising:
advertising a virtual Internet Protocol, IP, address (336, 431, 531, 631) shared by at least a first load balancer (365, 430, 530, 630) and a second load balancer (335, 345), the first load balancer (365, 430, 530, 630) corresponding to a first plurality of servers and the second load balancer (335, 345) corresponding to a second plurality of servers, wherein the first (365, 430, 530, 630) and second (335, 345) load balancers perform load balancing of Session Initiation Protocol, SIP, Register messages for Voice over Internet Protocol, VoIP, services offered by the first and second plurality of servers, respectively; and
responsive to receiving a SIP Register message from a client (301, 305, 401, 405, 501, 505, 601, 605), the first load balancer (365, 430, 530, 630) causing the SIP Register message to be directed to a particular server of the first plurality of servers, wherein the first load balancer (365, 430, 530, 630) is determined to be closer to the client (301, 305, 401, 405, 501, 505, 601, 605) than the second load balancer (335, 345), wherein said determination that the first load balancer (365, 430, 530, 630) is closer is performed on the basis of:
network metrics comprising link congestion and/or cost metrics assigned to routers, wherein said network metrics are to indicate logical closeness; or
link-state information and/or routing protocols, to indicate logical closeness; or
routing metrics to indicate geographic closeness, wherein said routing metrics are metrics of a target service network comprising the load balancers (365, 430, 530, 630, 335, 345).

2. The method of claim 1, wherein said determination that the first load balancer (365, 430, 530, 630) is closer is performed on the basis of the routing metrics, to determine a said load balancer geographically closest to an Internet Service Provider's preferred point of interconnection with a said target service network comprising the load balancers (365, 430, 530, 630, 335, 345).

3. The method of claim 1, wherein the virtual IP address (336, 431, 531, 631) comprises an Anycast address.

4. The method of claim 1, wherein the load balancing is based upon the relative loads being experienced by the plurality of servers as reported to the first load balancer (365, 430, 530, 630) by the first plurality of servers.

5. The method of claim 1, wherein the first load balancer (430) causing the SIP Register message to be directed to a particular server (440, 450) comprises the first load balancer (430) redirecting the client (401, 405) to the particular server (440, 450) and the first load balancer (430) is excluded from subsequent messaging flow exchanged between the particular server (440, 450) and the client (401, 405).

6. The method of claim 1, wherein the first load balancer (530) causing the SIP Register message to be directed to a particular server (540, 550) comprises the first load balancer (530) performing redirection by proxying and the first load balancer (530) is excluded from subsequent messaging flow exchanged between the particular server (540, 550) and the client (501, 505).

7. The method of claim 1, wherein the first load balancer (630) causing the SIP Register message to be directed to a particular server (640, 650) comprises the first load balancer (630) performing proxy forwarding and the first load balancer (630) remains within subsequent messaging flow exchanged between the particular server (640, 650) and the client (601, 605).

8. The method of claim 1, wherein the first load balancer (365, 430, 530, 630) and the second load balancer (335, 345) are physically located within a common geographic region (330, 340, 350).

9. The method of claim 1, wherein the client (301, 305, 401, 405, 501, 505, 601, 605) is provisioned with a domain name (311, 411, 511, 611) associated with the virtual IP address (336, 431, 531, 631), and wherein the method further comprises:
prior to the first load balancer (365, 430, 530, 630) receiving the SIP Register message, the client (301, 305, 401, 405, 501, 505, 601, 605) issuing a translation request to a Domain Name System, DNS, server (310, 410, 510, 610) for a translation of the provisioned domain name (311, 411, 511, 611); and
responsive to the translation request the DNS server (311, 411, 511, 611) returning the virtual IP address (336, 431, 531, 631) to the client (301, 305, 401, 405, 501, 505, 601, 605).

10. The method of claim 1, wherein the particular server comprises a feature server.

11. The method of claim 10, wherein the particular server comprises a registrar server.

12. The method of claim 1, wherein the method is performed as a result of one or more processors (702) executing instructions stored on a computer-readable medium (704, 706, 707).

13. A communication network (320, 420, 520, 620) comprising:
a plurality of different sets of servers configured to provide Voice over Internet Protocol, VoIP, services to communication devices (301, 305, 401, 405, 501, 505, 601, 605) within the communication network (320, 420, 520, 620);
a plurality of load balancers (335, 345, 365, 430, 530, 630) each configured to service a shared virtual Internet Protocol, IP, address (336, 431, 531, 631) common to the plurality of load balancers (335, 345, 365, 430, 530, 630), each of the plurality of load balancers (335, 345, 365, 430, 530, 630) arranged to perform load balancing of Session Initiation Protocol, SIP, Register messages on behalf of one of the plurality of different sets of servers located geographically proximate to the load balancer; and
a plurality of geographically dispersed communication devices (301, 305, 401, 405, 501, 505, 601, 605) communicatively coupled with the plurality of load balancers (335, 345, 365, 430, 530, 630), each of the plurality of geographically dispersed communication devices (301, 305, 401, 405, 501, 505, 601, 605) configured to issue SIP Register messages intended for any of the plurality of servers to the shared virtual IP address (336, 431, 531, 631), whereby upon issuing a SIP Register message, a communication device (301, 305, 401, 405, 501, 505, 601, 605) of the plurality of geographically dispersed communication devices (301, 305, 401, 405, 501, 505, 601, 605) is directed to a particular server of the plurality of different sets of servers that is associated with a load balancer (365, 430, 530, 630) of the plurality of load balancers (335, 345, 365, 430, 530, 630) that is determined to be closest to the communication device (301, 305, 401, 405, 501, 505, 601, 605), the communication network (320, 420, 520, 620) configured to select the particular server selected by a load balancing routine executing on the load balancer (365, 430, 530, 630),
wherein said determination of the closest load balancer (365, 430, 530, 630) is performed on the basis of:
network metrics comprising link congestion and/or cost metrics assigned to routers, wherein said network metrics are to indicate logical closeness; or
link-state information and/or routing protocols, to indicate logical closeness; or
routing metrics to indicate geographic closeness, wherein said routing metrics are metrics of a target service network comprising the load balancers (365, 430, 530, 630, 335, 345).

14. The communication network (320, 420, 520, 620) of claim 13, wherein each of the plurality of servers comprise feature servers.

15. The communication network (320, 420, 520, 620) of claim 13, wherein each of the plurality of load balancers (335, 345, 365, 430, 530, 630) comprise proxy servers.

16. The communication network (320, 420, 520, 620) of claim 13, wherein one or more of the plurality of geographically dispersed communication devices (301, 305, 401, 405, 501, 505, 601, 605) comprise Voice over IP, VoIP, phones.

17. The communication network (320, 420, 520, 620) of claim 13, wherein said determination of the closest load balancer (365, 430, 530, 630) is performed on the basis of the routing metrics, to determine a said load balancer geographically closest to an Internet Service Provider's preferred point of interconnection with a said target service network comprising the load balancers (365, 430, 530, 630, 335, 345).

## Patentansprüche

1. Verfahren, umfassend:
Ankündigen einer virtuellen Internetprotokoll- bzw. IP-Adresse (336, 431, 531, 631), die von mindestens einer ersten Lastausgleichsvorrichtung (365, 430, 530, 630) und einer zweiten Lastausgleichsvorrichtung (335, 345) geteilt wird, die erste Lastausgleichsvorrichtung (365, 430, 530, 630) korrespondierend mit einer ersten Vielzahl von Servern und die zweite Lastausgleichsvorrichtung (335, 345) korrespondierend mit einer zweiten Vielzahl von Servern, wobei die erste (365, 430, 530, 630) und die zweite (335, 345) Lastausgleichsvorrichtung einen Lastausgleich von Sitzungseinleitungsprotokoll- bzw. SIP-Registernachrichten für von der ersten bzw. der zweiten Vielzahl von Servern angebotenen Sprache-über-Internetprotokoll- bzw. VoIP-Dienste durchführen; und
als Reaktion auf Empfangen einer SIP-Registernachricht von einem Client (301, 305, 401, 405, 501, 505, 601, 605) Bewirken, durch die erste Lastausgleichsvorrichtung (365, 430, 530, 630), dass die SIP-Registernachricht an einen bestimmten Server der ersten Vielzahl von Servern geleitet wird, wobei bestimmt wird, dass die erste Lastausgleichsvorrichtung (365, 430, 530, 630) näher an dem Client (301, 305, 401, 405, 501, 505, 601, 605) als die zweite Lastausgleichsvorrichtung (335, 345) ist, wobei die Bestimmung, dass die erste Lastausgleichsvorrichtung (365, 430, 530, 630) näher ist, durchgeführt wird auf der Basis von:
Netzwerkmetriken, umfassend Verknüpfungsüberlastungs- und/oder Kostenmetriken, die Routern zugewiesen sind, wobei die Netzwerkmetriken logische Nähe anzeigen sollen; oder
Verknüpfüngsstatusinformationen und/oder Leitwegprotokollen zum Angeben logischer Nähe; oder
Leitwegmetriken zum Angeben geografischer Nähe, wobei die Leitwegmetriken Metriken eines Zieldienstnetzwerks sind, das die Lastausgleichsvorrichtungen (365, 430, 530, 630, 335, 345) umfasst.

2. Verfahren nach Anspruch 1, wobei die Bestimmung, dass die erste Lastausgleichsvorrichtung (365, 430, 530, 630) näher ist, auf der Basis von Leitwegmetriken durchgeführt wird, um die Lastausgleichsvorrichtung zu bestimmen, die einem bevorzugten Verschaltungspunkt mit dem Zieldienstnetzwerk, das die Lastausgleichsvorrichtungen (365, 430, 530, 630, 335, 345) umfasst, eines Internetdienstanbieters geografisch am nächsten ist.

3. Verfahren nach Anspruch 1, wobei die virtuelle IP-Adresse (336, 431, 531, 631) eine Anycast-Adresse umfasst.

4. Verfahren nach Anspruch 1, wobei der Lastausgleich auf den relativen Lasten basiert, die von der Vielzahl von Servern erfahren werden, wie der ersten Lastausgleichsvorrichtung (365, 430, 530, 630) durch die erste Vielzahl von Servern berichtet.

5. Verfahren nach Anspruch 1, wobei die erste Lastausgleichsvorrichtung (430), die bewirkt, dass die SIP-Registernachricht an einen bestimmten Server (440, 450) geleitet wird, die erste Lastausgleichsvorrichtung (430) umfasst, die den Client (401, 405) an den bestimmten Server (440, 450) umleitet, und die erste Lastausgleichsvorrichtung (430) aus dem nachfolgenden Nachrichtenfluss, der zwischen dem bestimmten Server (440, 450) und dem Client (401, 405) ausgetauscht wird, ausgeschlossen wird.

6. Verfahren nach Anspruch 1, wobei die erste Lastausgleichsvorrichtung (530), die bewirkt, dass die SIP-Registernachricht an einen bestimmten Server (540, 550) geleitet wird, die erste Lastausgleichsvorrichtung (530) umfasst, die Umleitung durch Proxying durchführt, und die erste Lastausgleichsvorrichtung (530) aus dem nachfolgenden Nachrichtenfluss, der zwischen dem bestimmten Server (540, 550) und dem Client (501, 505) ausgetauscht wird, ausgeschlossen wird.

7. Verfahren nach Anspruch 1, wobei die erste Lastausgleichsvorrichtung (630), die bewirkt, dass die SIP-Registernachricht an einen bestimmten Server (640, 650) geleitet wird, die erste Lastausgleichsvorrichtung (630) umfasst, die Proxy-Weiterleitung durchführt, und die erste Lastausgleichsvorrichtung (630) innerhalb des nachfolgenden Nachrichtenflusses, der zwischen dem bestimmten Server (640, 650) und dem Client (601, 605) ausgetauscht wird, verbleibt.

8. Verfahren nach Anspruch 1, wobei die erste Lastausgleichsvorrichtung (365, 430, 530, 630) und die zweite Lastausgleichsvorrichtung (335, 345) in einer gemeinsamen geografischen Region (330, 340, 350) physikalisch angeordnet sind.

9. Verfahren nach Anspruch 1, wobei der Client (301, 305, 401, 405, 501, 505, 601, 605) mit einem mit der virtuellen IP-Adresse (336, 431, 531, 631) assoziierten Domänennamen (311, 411, 511, 611) versehen ist und wobei das Verfahren ferner umfasst:
vor dem Empfangen der SIP-Registernachricht durch die erste Lastausgleichsvorrichtung (365, 430, 530, 630) Ausgeben, durch den Client (301, 305, 401, 405, 501, 505, 601, 605), einer Übersetzungsanforderung an einen Domänennamensystem- bzw. DNS-Server (310, 410, 510, 610) für eine Übersetzung des bereitgestellten Domänennamens (311, 411, 511, 611); und
als Reaktion auf die Übersetzungsanforderung Zurückgeben, durch den DNS-Server (311, 411, 511, 611), der virtuellen IP-Adresse (336, 431, 531, 631) an den Client (301, 305, 401, 405, 501, 505, 601, 605).

10. Verfahren nach Anspruch 1, wobei der bestimmte Server einen Merkmalsserver umfasst.

11. Verfahren nach Anspruch 10, wobei der bestimmte Server einen Registratorserver umfasst.

12. Verfahren nach Anspruch 1, wobei das Verfahren als ein Ergebnis davon, dass ein oder mehrere Prozessoren (702) in einem computerlesbaren Medium (704, 706, 707) gespeicherte Anweisungen ausführen, durchgeführt wird.

13. Kommunikationsnetzwerk (320, 420, 520, 620), umfassend:
eine Vielzahl von verschiedenen Sätzen von Servern, konfiguriert, Kommunikationsvorrichtungen (301, 305, 401, 405, 501, 505, 601, 605) in dem Kommunikationsnetzwerk (320, 420, 520, 620) Sprache-über-Internetprotokoll- bzw. VoIP-Dienste bereitzustellen;
eine Vielzahl von Lastausgleichsvorrichtungen (335, 345, 365, 430, 530, 630), jede konfiguriert zum Bedienen einer geteilten virtuellen Internetprotokoll- bzw. IP-Adresse (336, 431, 531, 631), die der Vielzahl von Lastausgleichsvorrichtung (335, 345, 365, 430, 530, 630) gemeinsam ist, wobei jede der Vielzahl von Lastausgleichsvorrichtungen (335, 345, 365, 430, 530, 630) angeordnet ist, Lastausgleich von Sitzungseinleitungsprotokoll- bzw. SIP-Registernachrichten im Auftrag eines der Vielzahl verschiedener Sätze von Servern, der geografisch nahe der Lastausgleichsvorrichtung angeordnet ist, durchzuführen; und
eine Vielzahl von geografisch verteilten Kommunikationsvorrichtungen (301, 305, 401, 405, 501, 505, 601, 605), kommunikativ an die Vielzahl von Lastausgleichsvorrichtungen (335, 345, 365, 430, 530, 630) gekoppelt, wobei jede der Vielzahl von geografisch verteilten Kommunikationsvorrichtungen (301, 305, 401, 405, 501, 505, 601, 605) konfiguriert ist, für beliebige der Vielzahl von Servern intendierte SIP-Registernachrichten an die geteilte virtuelle IP-Adresse (336, 431, 531, 631) auszugeben, wobei nach dem Ausgeben einer SIP-Registernachricht eine Kommunikationsvorrichtung (301, 305, 401, 405, 501, 505, 601, 605) der Vielzahl von geografisch verteilten Kommunikationsvorrichtungen (301, 305, 401, 405, 501, 505, 601, 605) zu einem bestimmten Server der Vielzahl von verschiedenen Sätzen von Servern, der mit einer Lastausgleichsvorrichtung (365, 430, 530, 630) der Vielzahl von Lastausgleichsvorrichtungen (335, 345, 365, 430, 530, 630) assoziiert ist, von dem bestimmt wird, dass er der Kommunikationsvorrichtung (301, 305, 401, 405, 501, 505, 601, 605) am nächsten ist, geleitet wird, wobei das Kommunikationsnetzwerk (320, 420, 520, 620) konfiguriert ist, den durch eine Lastausgleichsroutine, die in der Lastausgleichsvorrichtung (365, 430, 530, 630) ausgeführt wird, ausgewählten bestimmten Server auszuwählen,
wobei die Bestimmung der nächsten Lastausgleichsvorrichtung (365, 430, 530, 630) durchgeführt wird auf der Basis von:
Netzwerkmetriken, umfassend Verknüpfungsüberlastungs- und/oder Kostenmetriken, die Routern zugewiesen sind, wobei die Netzwerkmetriken logische Nähe anzeigen sollen; oder
Verknüpfungsstatusinformationen und/oder Leitwegprotokollen zum Angeben logischer Nähe; oder
Leitwegmetriken zum Angeben geografischer Nähe, wobei die Leitwegmetriken Metriken eines Zieldienstnetzwerks sind, das die Lastausgleichsvorrichtungen (365, 430, 530, 630, 335, 345) umfasst.

14. Kommunikationsnetzwerk (320, 420, 520, 620) nach Anspruch 13, wobei jeder der Vielzahl von Servern Merkmalsserver umfasst.

15. Kommunikationsnetzwerk (320, 420, 520, 620) nach Anspruch 13, wobei jede der Vielzahl von Lastausgleichsvorrichtungen (335, 345, 365, 430, 530, 630) Proxyserver umfasst.

16. Kommunikationsnetzwerk (320, 420, 520, 620) nach Anspruch 13, wobei eine oder mehrere der Vielzahl von geografisch verteilten Kommunikationsvorrichtungen (301, 305, 401, 405, 501, 505, 601, 605) Sprache-über-IP- bzw. VoIP-Telefone umfassen.

17. Kommunikationsnetzwerk (320, 420, 520, 620) nach Anspruch 13, wobei die Bestimmung der nächsten Lastausgleichsvorrichtung (365, 430, 530, 630) auf der Basis der Leitwegmetriken durchgeführt wird, um die Lastausgleichsvorrichtung zu bestimmen, die einem bevorzugten Verschaltungspunkt mit dem Zieldienstnetzwerk, das die Lastausgleichsvorrichtungen (365, 430, 530, 630, 335, 345) umfasst, eines Internetdienstanbieters geografisch am nächsten ist.

## Revendications

1. Procédé comprenant :
l'annonce d'une adresse de protocole Internet, IP, virtuelle (336, 431, 531, 631) qui est partagée par au moins un premier dispositif d'équilibrage de charge (365, 430, 530, 630) et un second dispositif d'équilibrage de charge (335, 345), le premier dispositif d'équilibrage de charge (365, 430, 530, 630) correspondant à une première pluralité de serveurs et le second dispositif d'équilibrage de charge (335, 345) correspondant à une seconde pluralité de serveurs, dans lequel les premier (365, 430, 530, 630) et second (335, 345) dispositifs d'équilibrage de charge réalisent un équilibrage de messages d'enregistrement de protocole d'initiation de session, SIP, pour des services de voix sur protocole Internet, VoIP, qui sont respectivement offerts par les première et seconde pluralités de serveurs ; et
en réponse à la réception d'un message d'enregistrement de SIP qui provient d'un client (301, 305, 401, 405, 501, 505, 601, 605), le premier dispositif d'équilibrage de charge (365, 430, 530, 630) forçant le fait que le message d'enregistrement de SIP est dirigé sur un serveur particulier de la première pluralité de serveurs, dans lequel le premier dispositif d'équilibrage de charge (365, 430, 530, 630) est déterminé comme étant plus proche du client (301, 305, 401, 405, 501, 505, 601, 605) que le second dispositif d'équilibrage de charge (335, 345), dans lequel ladite détermination consistant en ce que le premier dispositif d'équilibrage de charge (365, 430, 530, 630) est plus proche est réalisée sur la base :
de mesures de réseau qui comprennent des mesures de congestion de liaison(s) et/ou de coût qui sont assignées à des routeurs, dans lequel lesdites mesures de réseau ont pour objet d'indiquer une proximité logique ; ou
d'une information d'état de liaison(s) et/ou de protocoles de routage, pour indiquer une proximité logique ; ou
de mesures de routage pour indiquer une proximité géographique, dans lequel lesdites mesures de routage sont des mesures d'un réseau de service cible qui comprend les dispositifs d'équilibrage de charge (365, 430, 530, 630, 335, 345).

2. Procédé selon la revendication 1, dans lequel ladite détermination du fait que le premier dispositif d'équilibrage de charge (365, 430, 530, 630) est plus proche est réalisée sur la base des mesures de routage, de manière à déterminer un dit dispositif d'équilibrage de charge géographiquement le plus proche d'un point préféré, par un fournisseur de services Internet, d'interconnexion avec un dit réseau de service cible qui comprend les dispositifs d'équilibrage de charge (365, 430, 530, 630, 335, 345).

3. Procédé selon la revendication 1, dans lequel l'adresse IP virtuelle (336, 431, 531, 631) comprend une adresse Anycast.

4. Procédé selon la revendication 1, dans lequel l'équilibrage de charge est basé sur les charges relatives qui sont supportées par la pluralité de serveurs, tel que rapporté au premier dispositif d'équilibrage de charge (365, 430, 530, 630) par la première pluralité de serveurs.

5. Procédé selon la revendication 1, dans lequel le fait que le premier dispositif d'équilibrage de charge (430) force le fait que le message d'enregistrement de SIP soit dirigé sur un serveur particulier (440, 450) comprend le fait que le premier dispositif d'équilibrage de charge (430) redirige le client (401, 405) sur le serveur particulier (440, 450) et le fait que le premier dispositif d'équilibrage de charge (430) est exclu d'un flux de messagerie subséquent qui est échangé entre le serveur particulier (440, 450) et le client (401, 405).

6. Procédé selon la revendication 1, dans lequel le fait que le premier dispositif d'équilibrage de charge (530) force le fait que le message d'enregistrement de SIP soit dirigé sur un serveur particulier (540, 550) comprend le fait que le premier dispositif d'équilibrage de charge (530) réalise une redirection par effet proxy et le fait que le premier dispositif d'équilibrage de charge (530) est exclu d'un flux de messagerie subséquent qui est échangé entre le serveur particulier (540, 550) et le client (501, 505).

7. Procédé selon la revendication 1, dans lequel le fait que le premier dispositif d'équilibrage de charge (630) force le fait que le message d'enregistrement de SIP soit dirigé sur un serveur particulier (640, 650) comprend le fait que le premier dispositif d'équilibrage de charge (630) réalise un transfert proxy et le fait que le premier dispositif d'équilibrage de charge (630) reste à l'intérieur d'un flux de messagerie subséquent qui est échangé entre le serveur particulier (640, 650) et le client (601, 605).

8. Procédé selon la revendication 1, dans lequel le premier dispositif d'équilibrage de charge (365, 430, 530, 630) et le second dispositif d'équilibrage de charge (335, 345) sont physiquement localisés à l'intérieur d'une région géographique commune (330, 340, 350).

9. Procédé selon la revendication 1, dans lequel le client (301, 305, 401, 405, 501, 505, 601, 605) se voit fournir un nom de domaine (311, 411, 511, 611) qui est associé à l'adresse IP virtuelle (336, 431, 531, 631), et dans lequel le procédé comprend en outre :
avant que le premier dispositif d'équilibrage de charge (365, 430, 530, 630) ne reçoive le message d'enregistrement de SIP, le fait que le client (301, 305, 401, 405, 501, 505, 601, 605) délivre une requête de transposition à un serveur de système de noms de domaine, DNS, (310, 410, 510, 610) pour une transposition du nom de domaine fourni (311, 411, 511, 611) ; et
en réponse à la requête de transposition, le fait que le serveur DNS (311, 411, 511, 611) retourne l'adresse IP virtuelle (336, 431, 531, 631) au client (301, 305, 401, 405, 501, 505, 601, 605).

10. Procédé selon la revendication 1, dans lequel le serveur particulier comprend un serveur de caractéristiques.

11. Procédé selon la revendication 10, dans lequel le serveur particulier comprend un serveur d'enregistrements.

12. Procédé selon la revendication 1, dans lequel le procédé est réalisé en tant que résultat du fait qu'un ou que plusieurs processeur(s) (702) exécute(nt) des instructions qui sont stockées sur un support lisible par ordinateur (704, 706, 707).

13. Réseau de communication (320, 420, 520, 620) comprenant :
une pluralité de différents jeux de serveurs qui sont configurés de manière à fournir des services voix sur protocole Internet, VoIP, à des dispositifs de communication (301, 305, 401, 405, 501, 505, 601, 605) à l'intérieur du réseau de communication (320, 420, 520, 620) ;
une pluralité de dispositifs d'équilibrage de charge (335, 345, 365, 430, 530, 630) dont chacun est configuré de manière à servir une adresse de protocole Internet virtuelle, IP, partagée (336, 431, 531, 631) qui est commune à la pluralité de dispositifs d'équilibrage de charge (335, 345, 365, 430, 530, 630), chacun de la pluralité de dispositifs d'équilibrage de charge (335, 345, 365, 430, 530, 630) étant agencé de manière à réaliser un équilibrage de charge de messages d'enregistrement de protocole d'initiation de session, SIP, pour le compte de l'un de la pluralité de différents jeux de serveurs qui est localisé géographiquement à proximité du dispositif d'équilibrage de charge ; et
une pluralité de dispositifs de communication dispersés géographiquement (301, 305, 401, 405, 501, 505, 601, 605) qui sont couplés en termes de communication avec la pluralité de dispositifs d'équilibrage de charge (335, 345, 365, 430, 530, 630), chacun de la pluralité de dispositifs de communication dispersés géographiquement (301, 305, 401, 405, 501, 505, 601, 605) étant configuré de manière à délivrer des messages d'enregistrement de SIP qui sont destinés à l'un quelconque de la pluralité de serveurs sur l'adresse IP virtuelle partagée (336, 431, 531, 631), d'où il résulte que suite à la délivrance d'un message d'enregistrement de SIP, un dispositif de communication (301, 305, 401, 405, 501, 505, 601, 605) de la pluralité de dispositifs de communication dispersés géographiquement (301, 305, 401, 405, 501, 505, 601, 605) est dirigé sur un serveur particulier de la pluralité de différents jeux de serveurs qui est associé à un dispositif d'équilibrage de charge (365, 430, 530, 630) de la pluralité de dispositifs d'équilibrage de charge (335, 345, 365, 430, 530, 630) qui est déterminé comme étant le plus proche du dispositif de communication (301, 305, 401, 405, 501, 505, 601, 605), le réseau de communication (320, 420, 520, 620) étant configuré de manière à sélectionner le serveur particulier qui est sélectionné par un sous-programme d'équilibrage de charge qui est exécuté sur le dispositif d'équilibrage de charge (365, 430, 530, 630) ;
dans lequel ladite détermination du dispositif d'équilibrage de charge le plus proche (365, 430, 530, 630) est réalisée sur la base :
de mesures de réseau qui comprennent des mesures de congestion de liaison(s) et/ou de coût qui sont assignées à des routeurs, dans lequel lesdites mesures de réseau ont pour objet d'indiquer une proximité logique ; ou
d'une information d'état de liaison(s) et/ou de protocoles de routage, pour indiquer une proximité logique ; ou
de mesures de routage pour indiquer une proximité géographique, dans lequel lesdites mesures de routage sont des mesures d'un réseau de service cible qui comprend les dispositifs d'équilibrage de charge (365, 430, 530, 630, 335, 345).

14. Réseau de communication (320, 420, 520, 620) selon la revendication 13, dans lequel chacun de la pluralité de serveurs comprend des serveurs de caractéristiques.

15. Réseau de communication (320, 420, 520, 620) selon la revendication 13, dans lequel chacun de la pluralité de dispositifs d'équilibrage de charge (335, 345, 365, 430, 530, 630) comprend des serveurs proxy.

16. Réseau de communication (320, 420, 520, 620) selon la revendication 13, dans lequel un ou plusieurs de la pluralité de dispositifs de communication dispersés géographiquement (301, 305, 401, 405, 501, 505, 601, 605) comprend/comprennent des téléphones voix sur protocole Internet, VoIP.

17. Réseau de communication (320, 420, 520, 620) selon la revendication 13, dans lequel ladite détermination du dispositif d'équilibrage de charge le plus proche (365, 430, 530, 630) est réalisée sur la base des mesures de routage, de manière à déterminer un dit dispositif d'équilibrage de charge qui est géographiquement le plus proche d'un point préféré, par un fournisseur de services Internet, d'interconnexion avec un dit réseau de service cible qui comprend les dispositifs d'équilibrage de charge (365, 430, 530, 630, 335, 345).
